Europäisches Patentamt

European Patent Office

Office européen des brevets

(11) Veröffentlichungsnummer: **0 013 366**

**A1**

(12)

# EUROPÄISCHE PATENTANMELDUNG

(21) Anmeldenummer: **79105102.2**

(22) Anmeldetag: **12.12.79**

(51) Int. Cl.³: **G 02 C 7/04**
C 08 L 1/10, C 08 L 23/00
C 08 L 31/00

(30) Priorität: **30.12.78 DE 2856891**

(43) Veröffentlichungstag der Anmeldung:
**23.07.80 Patentblatt 80/15**

(84) Benannte Vertragsstaaten:
**AT BE CH DE FR GB IT NL SE**

(71) Anmelder: **BAYER AG**
**Zentralbereich Patente, Marken und Lizenzen**
**D-5090 Leverkusen 1, Bayerwerk(DE)**

(72) Erfinder: **Wingler, Frank, Dr.**
**Walter-Flex-Strasse 17**
**D-5090 Leverkusen(DE)**

(72) Erfinder: **Bartl, Herbert, Dr.**
**Eichendorff-Weg 10**
**D-5074 Odenthal(DE)**

(72) Erfinder: **Mietzsch, Fritz, Dr.**
**Isidor-Caro-Strasse 58**
**D-5000 Köln 80, G.(DE)**

(54) **Weiche Kontaktlinsen aus Mischungen von Celluloseestern und Ethylen-Vinylacetat-Copolymeren und Verwendung dieser Mischungen als lichtbrechendes Material.**

(57) Augenkontaktlinsen und -Kontaktschalen aus Polymermischungen von Celluloseestern und Ethylen-Vinylacetat-Copolymeren und die Verwendung dieser Mischungen als lichtbrechende Materialien in der Kontakt-Augenoptik.

Croydon Printing Company Ltd.

EP 0 013 366 A1

BAYER AKTIENGESELLSCHAFT          509 Leverkusen, Bayerwerk

Zentralbereich
Patente, Marken und Lizenzen   Kb-by

Weiche Kontaktlinsen aus Mischungen von Celluloseestern
und Ethylen-Vinylacetat-Copolymeren und Verwendung dieser
Mischungen als lichtbrechendes Material

Die Erfindung betrifft Augenkontaktlinsen und - Kontaktschalen aus speziellen Polymermischungen aus Cellulosestern und Ethylen-Vinylacetat-Copolymeren und die
Verwendung dieser Mischungen zur Herstellung von lichtbrechenden, weichen, nur geringe Mengen Wasser aufnehmenden Materialien für die Kontakt-Augenoptik.

In der Kontakt-Augenoptik werden bereits eine Reihe von
verschiedenen Polymeren eingesetzt. Die Materialien sitzen
unmittelbar auf der Hornhaut und beeinflussen daher
wesentlich die Stoffwechselvorgänge sowie den Sauerstoffhaushalt. Durch den Kontakt können Reizeinwirkungen der
Materialien direkt auf das Auge erfolgen.

Le A 19 347-Europa

- 2 -

Kontaktlinsen werden im allgemeinen in zwei Haupttypen eingeteilt, nämlich in harte Linsen und in hydrophile weiche Linsen. Linsen der ersten Art sind schon seit vielen Jahren bekannt und werden üblicherweise aus Polymethylmethacrylat hergestellt, das geschnitten und poliert werden kann, wodurch Linsen mit guten optischen Eigenschaften erhalten werden. Harte Polymethylmethacrylat-Linsen haben jedoch den bekannten Nachteil, daß sie die Hornhaut und das Innere des Augenlides reizen. Wenn ein Patient harte Linsen tragen soll, dann erfordert dies daher eine erhebliche Eingewöhnungszeit, während der der Patient die Linsen in allmählich zunehmenden Zeiträumen trägt, bis zu einem Maximum von einem etwa achtstündigen kontinuierlichen Tragen.

Aufgrund dieses Mangels der harten Linsen werden sie nur von einem geringen Teil von Brillenträgern angewendet.

In den letzten Jahren sind nun weiche Kontaktlinsen eingeführt worden, die aus Hydrogelen von hydrophilen Polymeren bestehen. Durch sie konnte das Problem der Augenreizung zum großen Teil überwunden werden, so daß die Patienten sich nunmehr an das Tragen von Kontaktlinsen viel rascher anpaßten.

Weiche hydrophile Linsenmaterialien auf Basis von Hydroxyethylmethacrylat und/oder Vinylpyrrolidon besitzen aufgrund ihrer Hydrophile zwar anfänglich einen größeren Tragekomfort als harte Linsen, haben aber den enormen Nachteil, daß sich in ihnen Stoffwechselprodukte ablagern,

Le A 19 347

- 3 -

Bakterien, Sporen oder Pilze eindringen und somit eine
Infektion des Auges hervorrufen können. Auch bei Verwendung
von nicht hydrophilen Materialien, wie z.B. von Silicongummi (US-Patent 3 996 189) traten in einigen Fällen Augenschäden auf, die ihre Ursache in auswandernden chemischen
Bestandteilen und in ihrer Lipophilie haben können bzw.
durch Veränderung der Oberflächenbeschaffenheit verursacht
werden.

Es besteht daher ein Bedarf nach neuen weichen, lichtbrechenden Materialien für Augen-Kontaktlinsen und
-Schalen, die weder die Nachteile der hydrophilen Hydroxyethylmethacrylat/Vinylpyrrolidon Linsen-Typen
noch den Nachteil der Siliconweichlinse besitzen.

Vorteilhaft wäre daher die Verwendung von weichen
polymeren Materialien, die keine Reizerscheinungen verursachen, chemisch indifferent sind, einen hohen Tragekomfort besitzen, eine erhöhte Sauerstoffdurchlässigkeit
aufweisen und keine Bakterien, Pilze oder Stoffwechselprodukte aufnehmen.

Es wurde nun gefunden, daß man kontaktoptische Materialien
mit einer ausgezeichneten Verträglichkeit und einer hohen
Sauerstoffdurchlässigkeit erhält, wenn man als lichtbrechendes Material weiche Polymermischungen aus Celluloseestern von aliphatischen Carbonsäuren und Ethylen-
Vinylacetat-Copolymeren verwendet. Außerdem haben diese
Mischungen den Vorteil, frei von Weichmachern und Verarbeitungsstabilisatoren zu sein, da bei ihrer thermoplastischen Verarbeitung derartige Zusätze nicht erforderlich sind.

Le A 19 347

- 4 -

Gegenstand der Erfindung sind Kontaktlinsen und Kontaktschalen aus lichtbrechendem Material aus Polymerlegierungen
aus

1) 20 bis 65 Gew.-% eines Celluloseestern von einer oder
   mehreren aliphatischen Carbonsäuren und

2) 35 bis 80 Gew.-% eines Ethylen-Vinylacetat-Copolymerisates mit 30 bis 98 Gew.-% eingebautem Vinylacetat.

Ein weiterer Gegenstand der Erfindung ist die Verwendung
von Polymerlegierungen aus

1) 20 bis 65 Gewichtsprozent eines Celluloseesters von
   einer oder mehreren aliphatischen Carbonsäuren und

2) 35 bis 80 Gewichtsprozent eines Ethylen-Vinylacetat-
   Copolymerisates mit 30 bis 98 Gewichtsprozent eingebautem Vinylacetat als lichtbrechendes Material für
   die Kontakt-Augenoptik.

Es ist überraschend, daß diese weichen Legierungen aus
zwei Polymeren mit unterschiedlichem Brechnungsindex
verträglich sind und keine Lichtstreuung zeigen.
Normalerweise treten bei derartigen Mischungen von zwei
Polymeren Unverträglichkeiten und somit Trübungen auf.

Geeignete Celluloseester zur Herstellung der erfindungsgemäßen lichtbrechenden Materialien sind Celluloseester
aliphatischer Carbonsäuren mit 1 - 5 C-Atomen, vorzugsweise Celluloseacetat, -acetopropionat und -acetobutyrat.

Die Verfahren zur Herstellung von organischen Cellulose-

Le A 19 347

0013366

- 5 -

estern sind seit langem bekannt und werden beispielsweise in Ullmanns Enzyklopädie der technischen Chemie
(Verlag Urban u. Schwarzenberg, München-Berlin, 1963)
im 5. Band auf S. 182-201 beschrieben.

Geeignete Celluloseacetobutyrate enthalten im allgemeinen
        30 bis 50 Gew.-% Buttersäure,
        10 bis 26 Gew.-% Essigsäure und
        0,7 bis 1,95 Gew.-% Hydroxylgruppen.

Bevorzugt ist die Verwendung von Celluloseacetobutyraten mit folgender Zusammensetzung:

        35 bis 46 Gew.-% Buttersäure,
        15 bis 21 Gew.-% Essigsäure und
        0,8 bis 1,7 Gew.-% Hydroxylgruppen.

Geeignete Celluloseacetopropionate enthalten im allgemeinen
        30 bis 63,5 Gew.-% Propionsäure,
        1 bis 12 Gew.-% Essigsäure und
        1,2 bis 1,95 Gew.-% Hydroxylgruppen.

Bevorzugt zu verwendende Celluloseacetopropionate haben
folgende Zusammensetzung:

        40 bis 60 Gew.-% Propionsäure,
        3 bis 8 Gew.-% Essigsäure und
        1,5 bis 1,8 Gew.-% Hydroxylgruppen.

Le A 19 347

- 6 -

Die relativen Viskositäten ($\eta_{rel}$) von 2 %igen Lösungen der verwendeten aliphatischen Celluloseester in Aceton liegen bei 25°C zwischen 3,5 und 5,0, bevorzugt zwischen 4,0 und 4,5.

Die Ethylen-Vinylacetat-Copolymerisate werden nach den bekannten Verfahren der Hoch- und Mitteldrucksynthese, gegebenenfalls in Lösungsmitteln wie tert.-Butanol, hergestellt. Sie haben einen Vinylacetatgehalt von 30-98 Gew.-%, vorzugsweise von 70-85 Gew.-%.

Die Copolymeren können in untergeordneten Mengen von 0-10 Gew.-% weitere Comonomere eingebaut enthalten wie Kohlenmonoxyd, Ester der Acrylsäure oder Methacrylsäure mit 1-12 Kohlenstoffatomen im Esterteil oder Vinylester aliphatischer Carbonsäuren mit 3 bis 16 Kohlenstoffatomen im Carbonsäureteil.

Die nach dem Verfahren der Hochdrucksynthese hergestellten Ethylen-Vinylacetat-Copolymerisate besitzen Schmelzindexwerte nach DIN 53 735 bei 190°C und einer Belastung von 2,16 kp zwischen 0,1 und 100 g, vorzugsweise zwischen 1,0 und 10 g, insbesondere zwischen 4,5 und 6 g. Die in Tetralin bei 120°C gemessenen Grenzviskositäten liegen im allgemeinen zwischen 0,6 und 1,5 dl/g. Die nach der Methode der Lichtstreuung ermittelten Molekulargewichte liegen vorzugsweise zwischen 50 000 und etwa 1 Million. Die nach der Beziehung $M_w/M_n - 1$ definierte molekulare Uneinheitlichkeit U (G. Schulz, Z. phys. Chem. (B) 43 (1939) Seiten 25 - 34) liegt im Bereich von 1,6 bis 30.

Le A 19 347

- 7 -

Diese Copolymerisate sind bevorzugt in heißen Kohlenwasserstoffen löslich.

Die beispielsweise nach dem Verfahren der Lösungs- oder
Emulsionspolymerisation hergestellten Ethylen-Vinylacetat-
Copolymerisate, die 30 bis 98 Gew.-% Vinylacetat, vorzugsweise 70 bis 85 Gew.-% Vinylacetat enthalten, besitzen Schmelzindexwerte (190$^{\circ}$C-2,16 kp), die größer
als 100 g sein können, vorzugsweise liegt der Schmelzindexbereich jedoch unter 15, insbesondere zwischen 0,5
und 5 g. Die mittels Lichtstreuung gemessenen Molekulargewichte liegen vorzugsweise zwischen 40 000 und einer
Million. Die molekulare Uneinheitlichkeit U beträgt 1 bis 6. Die
Copolymerisate sind löslich in Kohlenwasserstoffen
und Alkoholen und besitzen vorzugsweise Grenzviskositäten in Toluol zwischen 0,5 und 2,5 dl/g.
Die Ethylen-Vinylacetat-Copolymerisate können, falls gewünscht, ganz oder teilweise verseift sein.

Der bekannte nachteilige Effekt der sogenannten Weichmacherwanderung tritt bei den Polymermischungen aus organischen Celluloseestern und Ethylen-Vinylacetat-Copolymerisaten nicht auf, da bei der Verarbeitung der
Mischungen der Zusatz von Weichmachern und ähnlichen
Hilfsmitteln nicht erforderlich ist. Dadurch sind solche
Mischungen besonders gut geeignet für Anwendungen, bei
denen es auf physiologische Verträglichkeit ankommt.

Die Herstellung der Polymerlegierungen aus organischen
Celluloseestern und Ethylen-Vinylacetat-Copolymerisaten
erfolgt durch intensives Vermischen der Komponenten

Le A 19 347

- 8 -

in Masse oder auch in Lösung. Als Lösungsmittel kommen
z.B. in Frage: Tetrahydrofuran, Methylenchlorid, Aceton
und Eisessig. Zur Herstellung der Mischungen in Masse können
alle bekannten Mischverfahren benutzt werden wie z.B. das
Mischen auf Walzwerken oder in Schneckenextrudern. Die
erfindungsgemäß zu verwendenden Mischungen aus organischen Celluloseestern und Ethylen-Vinylacetat-
Copolymerisaten lassen sich problemlos auf bekannten
Extrudern und Spritzgußmaschinen kontinuierlich und
diskontinuierlich verarbeiten und zeigen dabei eine
gute Fließfähigkeit.

Die Polymerbestandteile, Celluloseester und Vinylacetatcopolymerisat liegen in Form einer Polymerlegierung vor. Es handelt sich um eine mehrphasige Polymermischung bei der die einzelnen Phasen jedoch keine
Lichtstreuung verursachen. Der Teilchendurchmesser
der einzelnen Phasen liegt im allgemeinen unterhalb
der Lichtwellenlänge.

Die Polymerlegierungen können direkt zu Linsenkörpern
verspritzt werden. Man kann auch zunächst erst einmal
Rohlinge herstellen und diese spanabhebend bearbeiten
und anschließend polieren. Die erhältlichen halbharten bis weichen kontaktoptischen Materialien besitzen ein Wasseraufnahmevermögen von etwa 2 Gew.-%. Die
beschriebenen Polymermischungen besitzen Glasübergangstemperaturen unterhalb von $10^{\circ}C$, sind also im Raum-
Temperaturbereich kautschukelastisch. Die Verarbeitung
zu Augen-Kontaktlinsen- oder -Kontaktschalen erfolgt
nach herkömmlichen Verfahren durch Spritzguß in Formen,
durch Schleuderguß in Formen oder durch Stanzen oder
Prägen aus Folien. Die Folien können wiederum nach be-

Le A 19 347

- 9 -

kannten Verfahren der Kautschuktechnologie durch Walzen,
Kalandrieren, Extrusion oder auch durch Filmbildung
aus Lösungen hergestellt werden. Die Linsen können
nach ihrer Formgebung vulkanisiert werden. Es kommt sowohl die peroxidische Vulkanisation in Frage, wie sie
zur Vernetzung von Ethylen-Vinylacetat-Copolymerisaten
bekannt ist, als auch die Elektronenstrahlvernetzung.
Vorzuziehen ist die Elektronenstrahlvernetzung, da bei
ihr keine chemischen Hilfsmittel benötigt werden,
die das Auge reizen oder schädigen könnten. Der Strahlendosierbereich liegt bei 0,1 bis 100 M rad. Die Bestrahlungstemperatur kann bei 5 bis 80$^{\circ}$C liegen. Die
Bestrahlungsintensität sollte bei 10$^{-3}$ M rad pro Stunde
bis 200 M rad pro Stunde liegen. Die Bestrahlung kann
sowohl in Luft als auch unter Inertgas beziehungsweise
auch im Vakuum erfolgen.

Die weichen Kontaktlinsen- oder -schalen zeichnen sich
durch ihren hohen Tragekomfort und durch ihre physiologische Indifferenz aus. Sie nehmen nur in geringem Umfang Wasser auf (1-2 Gew.-%) und speichern weder Bakterien, Sporen und Pilze noch Stoffwechselprodukte und
Sterilisationsmittel. Sie enthalten keine niedermolekularen Zusatzmittel, die auswandern und das Auge
schädigen könnten. Die Verwendung von Vulkanisationshilfsmitteln und Füllstoffen ist nicht notwendig. Hervorzuheben ist die gute Benetzbarkeit mit Tränenflüssigkeit und die geringe Fettlöslichkeit.

Le A 19 347

Beispiel 1

Auf einer Walze werden bei 80°C Walzentemperatur 50 Gewichtsteile eines Ethylen-Vinylacetat-Copolymeren mit einem Vinylacetatgehalt von 80 Gew.-% und einer Grenzviskosität von 0,75 dl/g, gemessen bei 25°C in Tetrahydrofuran mit 50 Gewichtsteilen eines Celluloseacetobutyrats mit einem Hydroxylgehalt von 1,7 Gew.-%, einem Buttersäuregehalt von 46,5 Gew.-% und einem Essigsäuregehalt von 20 Gew.-% gemischt und anschließend zu einer Folie von 3 mm Dicke ausgezogen. Die Folie wird mit Quarzstempeln bei 180°C zu Kontaktlinsen gepresst. Die Stempel werden unter Druck auf ca. 30°C abgekühlt, geöffnet und die Linsen von dem konkaven Press-Stempel getrennt. Anschließend werden die noch auf dem konvexen Stempel befindlichen Linsen mit einem hochtourigen Schleifwerkzeug (60 m/sec. Schleifgeschwindigkeit) randbearbeitet und anschließend, noch auf dem konvexen Stempel befindlich, im Vakuum 3 Minuten bei 25°C mit 10 Mgrad bestrahlt. Die nunmehr ausvulkanisierte Linse wird vom Stempel getrennt, 48 Stunden bei 120°C und 0,1 Torr entgast und anschließend in physiologischer Kochsalzlösung hydratisiert und durch Kochen sterilisiert. Die weiche Linse besitzt eine Glasübergangstemperatur von -20°C. Auf einem Kaninchenauge bewirkte sie nach 30 Tagen ununterbrochenen Tragens keine Vascularisation, die Bindehaut blieb reizfrei.

Die Sauerstoffdurchlässigkeit (STP) beträgt

$$3.0 \frac{cm^3 . 10^{-2}}{24 \text{ Stdn. und } 0,21 \text{ bar,}}$$

gemessen an einer 0,4 mm dicken Linse.

Le A 19 347

Beispiel 2

In 100 Gewichtsteilen Tetrahydrofuran werden 10 Gewichtsteile eines Celluloseacetopropionates mit einem Essigsäuregehalt von 3,5 Gew.-%, einem Propionsäuregehalt von 45 Gew.-% und einem Hydroxyl-Gehalt von 1,6 Gew.-% zusammen mit 10 Gewichtsteilen eines Ethylen-Vinylacetat-Copolymerisates mit 80 Gew.-% eingebautem Vinylacetat gemischt. Die Lösung wurde auf einem Schneckenverdampfer bei 200°C und 1 Torr eingedampft und auf einem Kalander zu einer 2 mm dicken Folie verarbeitet. Aus der Folie wurden bei 180°C auf Quarzwerkzeugen Linsen gepresst und wie im Beispiel Nr. 1 beschrieben randbearbeitet und vulkanisiert. Die wie im Beispiel Nr. 1 behandelten weichen Linsen wurden auf Kaninchenaugen gesetzt. Nach 30 Tagen ununterbrochenen Tragens traten keine Schäden am Auge auf.

0013366

- 12 -

<u>Patentansprüche</u>

1. Kontaktlinsen und Kontakt schalen aus lichtbrechenden Material aus Polymerlegierungen aus

1. 20 bis 65 Gewichtsprozent eines Celluloseesters
von einer oder mehreren aliphatischen Carbonsäuren
und

2. 35 bis 80 Gew.-% eines Ethylen-Vinylacetat-Copolymerisates mit 30 bis 98 Gew.-% eingebautem
Vinylacetat.

2. Verwendung von weichmacherfreien Polymerlegierungen
mit einer Glasübergangstemperatur von unter 10$^\circ$C
bestehend aus

1. 20 bis 65 Gewichtsprozent eines Celluloseesters
von aliphatischen Carbonsäuren und

2. 35 bis 80 Gewichtsprozent eines Ethylen-Vinylacetat-
Copolymerisates mit 30 bis 98 Gewichtsprozent
eingebautem Vinylacetat

als lichtbrechendes Material für die Kontakt-
Augenoptik.

<u>Le A 19 347</u>

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - U1 - 7 739 488 (O. CH. GEYER)<br>* ganzes Dokument *<br>-- | 1,2 |
| A | DE - A1 - 2 526 178 (BAYER AG)<br>* Ansprüche 1 bis 6; Seiten 3, 4, 8 *<br>-- | |
| A | US - A - 4 116 549 (J.E. HARRIS et al.)<br>* Ansprüche 1 bis 3 *<br>-- | |
| A | US - A - 3 900 250 (E.J. IVANI)<br>* Spalte 3, Zeile 4 bis Spalte 4, Zeile 47 *<br>---- | |

### KLASSIFIKATION DER ANMELDUNG (Int.Cl.)

G 02 C 7/04

C 08 L 1/10

C 08 L 23/00

C 08 L 31/00

### RECHERCHIERTE SACHGEBIETE (Int.Cl.)

C 08 L 1/10

C 08 L 23/00

C 08 L 31/00

G 02 B 1/00

G 02 B 1/04

G 02 C 7/04

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 25-03-1980 | LEMMERICH |

EPA form 1503.1 06.78